# EUROPEAN PATENT APPLICATION

(11) **EP 4 692 100 A1**
(43) Date of publication of application: **11.02.2026**
(21) Application number: 25792056.1
(22) Date of filing: 23.05.2025
(51) Int. Cl.: C07F 17/00, C08F 4/659, C08F 110/06

(54) **TRANSITION METAL COMPOUND, CATALYST COMPOSITION, AND METHOD FOR PREPARING POLYPROPYLENE BY USING SAME**

(30) Priority: 24.05.2024 KR 20240067859; 22.05.2025 KR 20250067013
(71) Applicant: LG CHEM, LTD., Yeongdeungpo-gu Seoul 07336 (KR)
(72) Inventor: LIM, Taehyun, Daejeon 34122 (KR); JUNG, Seung Hwan, Daejeon 34122 (KR); LEE, Insun, Daejeon 34122 (KR); KIM, Yongjin, Daejeon 34122 (KR); PARK, Hyemi, Daejeon 34122 (KR)
(74) Representative: Hoffmann Eitle
(86) International application number: PCT/KR2025/006986
(87) International publication number: WO 2025/244442

(57) **Abstract**

Provided are a transition metal compound, a catalyst composition, and a method for preparing polypropylene using the same, which can prepare polypropylene having a low weight-average molecular weight and a high melt index along with a narrow molecular weight distribution, and consequently, is useful for a nonwoven fabric having ultra-low basis weight properties and high strength properties.

## Description

### [TECHNICAL FIELD]

### CROSS-REFERENCE TO RELATED APPLICATION

This application claims the benefit of priority based on Korean Patent Application No. 10-2024-0067859 filed on May 24, 2024, and Korean Patent Application No. 10-2025-0067013 filed on May 22, 2025, and all contents disclosed in the documents of said Korean patent applications are incorporated as part of this specification.

The present invention relates to a transition metal compound, a catalyst composition, and a method for preparing polypropylene using the same, which can prepare polypropylene having a low weight-average molecular weight and a high melt index along with a narrow molecular weight distribution to exhibit excellent fiber spinnability and strength properties, and consequently, is useful for a nonwoven fabric having ultra-low basis weight properties and high strength properties.

### [BACKGROUND ART]

An olefin polymerization catalyst system can be classified into a Ziegler-Natta and a metallocene catalyst system, and these two high-activity catalyst systems have been developed to suit their respective characteristics.

The Ziegler-Natta catalyst has been widely applied to existing commercial processes since its invention in the 1950s, but since it is a multi-site catalyst in which multiple active sites are mixed, it is characterized by a broad molecular weight distribution of the polymer, and has a problem in that the composition distribution of the comonomer is not uniform, leading to limitations in securing desired physical properties.

On the other hand, a metallocene catalyst is composed of a combination of a main catalyst whose main component is a transition metal compound and an organometallic compound based cocatalyst whose main component is aluminum, and such a catalyst is a homogeneous complex catalyst and is a single-site catalyst, and according to the single-site characteristic, a polymer with a narrow molecular weight distribution and a uniform composition distribution of the comonomer is obtained, and it has the characteristic that the stereoregularity, copolymerization characteristics, molecular weight, crystallinity, etc., of the polymer can be changed according to the modification of the ligand structure of the catalyst and the change of polymerization conditions.

Recently, due to changes in environmental awareness, a reduction in the generation of Volatile Organic Compound (VOC) is being pursued in many product groups. However, the Ziegler-Natta catalyst (Z/N, ziegler-natta) used in the preparation of polypropylene has a problem of generating high TVOC. In particular, in the case of various commercialized polypropylenes, products applying the Ziegler-Natta catalyst are mainstream, but recently, the transition to products applying a metallocene catalyst, which has less odor and shows low elution characteristics, is accelerating.

Globally, as interest in sustainability grows, the demand to reduce plastic usage is also increasing. One such demand is the reduction of disposable hygiene products, which calls for a decrease in the use of polymer fibers primarily employed in their manufacture.

In the case of polymer fibers, the basis weight can be controlled by the molecular weight distribution during the manufacture of a nonwoven fabric. The narrower the molecular weight distribution, the more excellent spinnability and strength properties are exhibited, so the basis weight can be reduced when manufacturing a nonwoven fabric. A meltblown (M/B) nonwoven fabric is a polypropylene product with a very high melt index, and a narrow molecular weight distribution of 2.6 or less is usually required for spinning properties.

Accordingly, there is a need for research on a method for adjusting the molecular weight distribution of polypropylene so that the basis weight can be reduced when manufacturing a nonwoven fabric.

### [DETAILED DESCRIPTION OF THE INVENTION]

### [TECHNICAL PROBLEM]

An object of the present invention is to provide a novel transition metal compound which can prepare polypropylene having a low weight-average molecular weight and a high melt index along with a narrow molecular weight distribution to exhibit excellent fiber spinnability and strength properties, and consequently, is useful for a nonwoven fabric having ultra-low basis weight properties and high strength properties.

Another object of the present invention is to provide a catalyst composition including the transition metal compound, and a method for preparing polypropylene using the same.

### [TECHNICAL SOLUTION]

There is provided a transition metal compound represented by the following Chemical Formula 1. 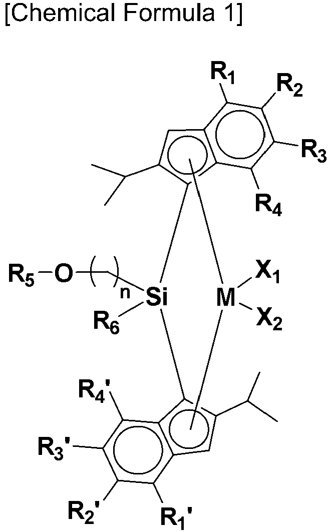
in the Chemical Formula 1,
M is a Group 4 transition metal,
R₁ and R₁' are the same as or different from each other, and are each independently a C₆₋₃₀ aryl group which is unsubstituted or substituted with one or more substituents selected from the group consisting of a C₁₋₂₀ alkyl group, a C₁₋₂₀ alkoxy group, a C₂₋₃₀ alkoxyalkyl group, a C₆₋₃₀ aryl group, a C₇₋₃₀ arylalkyl group, and a C₇₋₃₀ alkylaryl group,
R₂ to R₄, and R₂' to R₄' are the same as or different from each other, and are each independently hydrogen, deuterium, a C₁₋₃₀ alkyl group, a C₆₋₃₀ aryl group, a C₇₋₃₀ arylalkyl group, or a C₇₋₃₀ alkylaryl group,
R₅ and R₆ are the same as or different from each other, and are each independently a C₁₋₂₀ alkyl group,
X₁ and X₂ are the same as or different from each other, and are each independently a halogen group or a C₁₋₂₀ alkyl group, and
n is an integer between 1 to 20.

Further, there is also provided a catalyst composition including the transition metal compound.

Furthermore, there is provided a method for preparing polypropylene, including a step of polymerizing a propylene monomer in the presence of the catalyst composition.

### [ADVANTAGEOUS EFFECTS OF THE INVENTION]

The transition metal compound according to the present invention is useful for preparing polypropylene that exhibits excellent fiber spinnability and strength properties by having a low weight-average molecular weight and a high melt index along with a narrow molecular weight distribution.

In addition, polypropylene prepared using the transition metal compound or a catalyst composition including the same has a low weight-average molecular weight and a high melt index along with a narrow molecular weight distribution, so it can be used to manufacture a nonwoven fabric having ultra-low basis weight properties and high strength properties, particularly a low-brittleness, microfibrillated meltblown nonwoven fabric.

### [EMBODIMENTS FOR CARRYING OUT THE INVENTION]

The terms used in this specification are used only to describe exemplary embodiments, and are not intended to limit the present invention.

A singular expression includes a plural expression unless the context clearly indicates otherwise.

In this specification, terms such as "comprise", "be equipped with", or "have" are intended to describe the implemented features, numbers, steps, components, or combinations thereof, and do not exclude the possibility of one or more other features, numbers, steps, components, their combinations, or additions.

In addition, the term "to" used in the description of a numerical range in this specification means including both the upper limit value and the lower limit value. For example, "1 to 3" means 1 or more and 3 or less.

Also, in this specification, 'room temperature' means 20±5°C.

The present invention may be subject to various modifications and may have various forms, and specific embodiments will be illustrated and described in detail below. However, this is not intended to limit the present invention to a specific disclosed form, and it should be understood to include all modifications, equivalents, and substitutes included in the spirit and technical scope of the present invention.

Hereinafter, a transition metal compound, a catalyst composition, and a method for preparing polypropylene using the same according to the present invention will be described in detail.

A transition metal compound according to the present invention is represented by the following Chemical Formula 1: 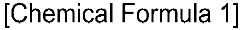 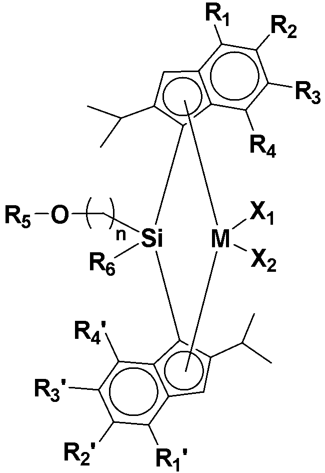
in the Chemical Formula 1,
M is a Group 4 transition metal,
R₁ and R₁' are the same as or different from each other, and are each independently a C₆₋₃₀ aryl group which is unsubstituted or substituted with one or more substituents selected from the group consisting of a C₁₋₂₀ alkyl group, a C₁₋₂₀ alkoxy group, a C₂₋₃₀ alkoxyalkyl group, a C₆₋₃₀ aryl group, a C₇₋₃₀ arylalkyl group, and a C₇₋₃₀ alkylaryl group,
R₂ to R₄, and R₂' to R₄' are the same as or different from each other, and are each independently hydrogen, deuterium, a C₁₋₃₀ alkyl group, a C₆₋₃₀ aryl group, a C₇₋₃₀ arylalkyl group, or a C₇₋₃₀ alkylaryl group,
R₅ and R₆ are the same as or different from each other, and are each independently a C₁₋₂₀ alkyl group,
X₁ and X₂ are the same as or different from each other, and are each independently a halogen group or a C₁₋₂₀ alkyl group, and
n is an integer between 1 to 20.

Unless otherwise specified herein, the following terms may be defined as follows.

Halogen may be fluorine (F), chlorine (CI), bromine (Br), or iodine (I).

A C₁₋₂₀ (1 to 20 carbon atoms) alkyl group may be a straight-chain, branched-chain, or cyclic alkyl group. Specifically, the C₁₋₂₀ alkyl group may be a C₁₋₂₀ straight-chain alkyl; a C₁₋₁₂ straight-chain alkyl; a C₁₋₅ straight-chain alkyl; a C₃₋₂₀ branched-chain or cyclic alkyl; a C₃₋₁₅ branched-chain or cyclic alkyl; or a C₃₋₁₂ branched-chain or cyclic alkyl group. More specifically, examples of the C₁₋₂₀ alkyl group include, but are not limited to, a methyl group, an ethyl group, a propyl group, an isopropyl group, an n-butyl group, a tert-butyl group, a pentyl group, a hexyl group, a heptyl group, an octyl group, a cyclopropyl group, a cyclobutyl group, a cyclopentyl group, a cyclohexyl group, a cycloheptyl group, or a cyclooctyl group.

A C₁₋₂₀ alkoxy group may be a straight-chain, branched-chain, or cyclic alkoxy group. Specifically, the C₁₋₂₀ alkoxy group may be a C₁₋₂₀ straight-chain alkoxy group; a C₁₋₁₂ straight-chain alkoxy; a C₁₋₅ straight-chain alkoxy group; a C₃₋₂₀ branched-chain or cyclic alkoxy; a C₃₋₁₅ branched-chain or cyclic alkoxy; or a C₃₋₁₂ branched-chain or cyclic alkoxy. More specifically, examples of the C₁₋₂₀ alkoxy group include, but are not limited to, a methoxy group, an ethoxy group, an n-propoxy group, an iso-propoxy group, an n-butoxy group, an iso-butoxy group, a tert-butoxy group, an n-pentoxy group, an iso-pentoxy group, a neo-pentoxy group, or a cyclohexoxy group.

A C₂₋₂₀ alkoxyalkyl group may be a functional group in which one or more hydrogens of the aforementioned alkyl group are substituted with an alkoxy group. More specifically, examples of the C₂₋₂₀ alkoxyalkyl group include, but are not limited to, alkoxyalkyl groups such as a methoxymethyl group, a methoxyethyl group, an ethoxymethyl group, an iso-propoxymethyl group, an iso-propoxyethyl group, an iso-propoxypropyl group, an iso-propoxyhexyl group, a tert-butoxymethyl group, a tert-butoxyethyl group, a tert-butoxypropyl group, and a tert-butoxyhexyl group.

A C₆₋₃₀ aryl group may be a monocyclic, bicyclic, or tricyclic aromatic hydrocarbon. Specifically, the C₆₋₃₀ aryl group may be a C₆₋₁₈ aryl group, or a C₆₋₁₂ aryl group. More specifically, examples of the C₆₋₃₀ aryl group include, but are not limited to, a phenyl group, a biphenyl group, a naphthyl group, an anthracenyl group, a phenanthrenyl group, or a fluorenyl group.

A C₇₋₃₀ alkylaryl group means that one or more hydrogens of an aromatic ring are substituted by the aforementioned alkyl group. Specifically, the C₇₋₃₀ alkylaryl group may be a C₇₋₂₀ alkylaryl group, or a C₇₋₁₄ alkylaryl group. More specifically, examples of the C₇₋₃₀ alkylaryl group include, but are not limited to, a methylphenyl group, an ethylphenyl group, a t-butylphenyl group, a methylbiphenyl group, or a methylnaphthyl group.

A C₇₋₃₀ arylalkyl group may mean a substituent in which one or more hydrogens of the aforementioned alkyl group are substituted by the aforementioned aryl group. Specifically, the C₇₋₃₀ arylalkyl group may be a C₇₋₂₀ arylalkyl group, or a C₇₋₁₄ arylalkyl group. More specifically, examples of the C₇₋₃₀ arylalkyl group include, but are not limited to, a phenylmethyl group, a phenylethyl group, a biphenylmethyl group, or a naphthylmethyl group.

And, the Group 4 transition metal may be titanium (Ti), zirconium (Zr), hafnium (Hf), or rutherfordium (Rf), and specifically may be titanium (Ti), zirconium (Zr), or hafnium (Hf), but is not limited thereto.

Meanwhile, the transition metal compound according to the present invention, as in the Chemical Formula 1, includes two indene structures in which the carbon at the 2-position is substituted with an isopropyl group, and the carbon at the 4-position is substituted with a C₆₋₃₀ aryl group which is unsubstituted or substituted with one or more substituents selected from the group consisting of a C₁₋₂₀ alkyl group, a C₁₋₂₀ alkoxy group, a C₂₋₃₀ alkoxyalkyl group, a C₆₋₃₀ aryl group, a C₇₋₃₀ arylalkyl group, and a C₇₋₃₀ alkylaryl group, and the indene structures are connected by a silicon bridge group. In addition, the silicon bridge group includes a tether group of an alkoxyalkyl group containing a long alkylene chain. Due to such a characteristic structure, the transition metal compound can prepare polypropylene having a low weight-average molecular weight and a high melt index along with a narrow molecular weight distribution, thereby exhibiting excellent fiber spinnability and strength properties, and as a result, can be useful for a nonwoven fabric having ultra-low basis weight properties and high strength properties, particularly a low-brittleness, microfibrillated meltblown nonwoven fabric.

Specifically, the transition metal compound can exhibit high structural stability as it has a structure in which two indene structures are connected by a bridge group as in the Chemical Formula 1. In particular, when the two indene structures are substituted with the same substituent at the same position and thus have the same structure, the structural stability can be further enhanced.

In addition, when propylene and H₂ are reacted together during a polymerization reaction for preparing polypropylene, a competitive reaction occurs, and by substituting the carbon at the 2-position of the indene structure with a bulky isopropyl group in the Chemical Formula 1, a certain steric arrangement is given to the metal center, which improves the reactivity of H₂, which is smaller in size than propylene, and as a result, the hydrogen reactivity can be increased in the polymerization process. Also, because it has high hydrogen reactivity, a high melt index product (high MI PP) can be produced with a small amount of hydrogen.

In addition to this, by including a substituent with an electron-donating effect (R₁ and R₁') at the 4-position carbon of the indene structure, specifically a C₆₋₃₀ aryl group unsubstituted or substituted with one or more substituents selected from the group consisting of a C₁₋₂₀ alkyl group, a C₁₋₂₀ alkoxy group, a C₂₋₃₀ alkoxyalkyl group, a C₆₋₃₀ aryl group, a C₇₋₃₀ arylalkyl group, and a C₇₋₃₀ alkylaryl group, it is possible to abundantly provide electrons to the Group 4 transition metal atom included in the bridge structure of the Chemical Formula 1. As a result, the cationic property of the Group 4 transition metal M is increased, thereby improving the catalyst activity, and also increasing the reaction rate, so that polypropylene with a higher molecular weight can be prepared under the same conditions during the polymerization reaction.

In addition, when the C₆₋₃₀ aryl group is substituted with one or more substituents selected from the group consisting of a C₁₋₂₀ alkyl group, a C₁₋₂₀ alkoxy group, a C₂₋₃₀ alkoxyalkyl group, a C₆₋₃₀ aryl group, a C₇₋₃₀ arylalkyl group, and a C₇₋₃₀ alkylaryl group, electrons can be more abundantly supplied to the aryl group by the inductive effect. Also, by increasing the overall size of the transition metal compound to increase the available angle, the access of monomers is facilitated, thereby exhibiting more improved catalyst activity.

In addition, the transition metal compound can exhibit high structural stability because it supplies electrons to the Group 4 transition metal M in a form where two indene structures are connected by a bridge group.

In addition, the bridge group includes a tether group of alkoxyalkyl that can act as a Lewis base as an oxygen-donor. Due to such a tether group, it can be supported by chemically bonding with a support, and as a result, it can secure process stability by preventing the phenomenon of the catalyst precursor being released from the support during the polymerization process. In particular, if the catalyst precursor is leached, phenomena such as fouling, where polymers entangle on the reactor surface during polymerization, occur, but the transition metal compound has excellent bonding performance with a support during the preparation of a supported catalyst and can minimize the leaching phenomenon where the precursor detaches from the support during polymerization processes such as for propylene, and as a result, can improve the process stability along with the catalyst activity during propylene polymerization, thereby greatly reducing process troubles (reactor fouling, plugging) even in long-term production.

Specifically, in the Chemical Formula 1, M may be titanium (Ti), zirconium (Zr), or hafnium (Hf).

In addition, specifically, in the Chemical Formula 1, R₁ and R₁' may be the same as or different from each other, and may each independently be a C₆₋₁₈ aryl group unsubstituted or substituted with one or more substituents selected from the group consisting of a C₁₋₁₂ alkyl group, a C₁₋₁₂ alkoxy group, a C₂₋₂₀ alkoxyalkyl group, a C₆₋₂₀ aryl group, a C₇₋₂₀ arylalkyl group, and a C₇₋₂₀ alkylaryl group. More specifically, R₁ and R₁' may be the same as each other, and may be a C₆₋₁₂ aryl group unsubstituted or substituted with one or more substituents selected from the group consisting of a C₁₋₆ straight-chain alkyl group, a C₃₋₆ branched-chain alkyl group, a C₁₋₆ straight-chain alkoxy group, a C₃₋₆ branched-chain alkoxy group, and a C₆₋₁₂ aryl group. Even more specifically, R₁ and R₁' may be the same as each other and may be a t-butylphenyl group, a 2,4-di-t-butylphenyl group, a methylphenyl, an isopropoxyphenyl, or a biphenyl.

In addition, in the Chemical Formula 1, specifically, R₂ to R₄, and R₂' to R₄' may each be hydrogen.

In addition, in the Chemical Formula 1, specifically, R₅ may be a C₃₋₁₂ branched-chain alkyl group, and R₆ may be a C₁₋₆ straight-chain alkyl group or a C₃₋₆ branched-chain alkyl group. More specifically, R₅ may be a t-butyl group, and R₆ may be a methyl group.

In addition, in the Chemical Formula 1, specifically, X₁ and X₂ may be the same as or different from each other, and may each independently be a chloro or methyl group.

In addition, in the Chemical Formula 1, specifically, n may be an integer between 1 to 20. More specifically, n may be an integer of 1 or more, or 2 or more, or 4 or more, and 20 or less, or 12 or less, or 10 or less, or 8 or less, or 6 or less.

More specifically, the transition metal compound may be any one of the compounds represented by the following Chemical Formulas 1-1 to 1-6:

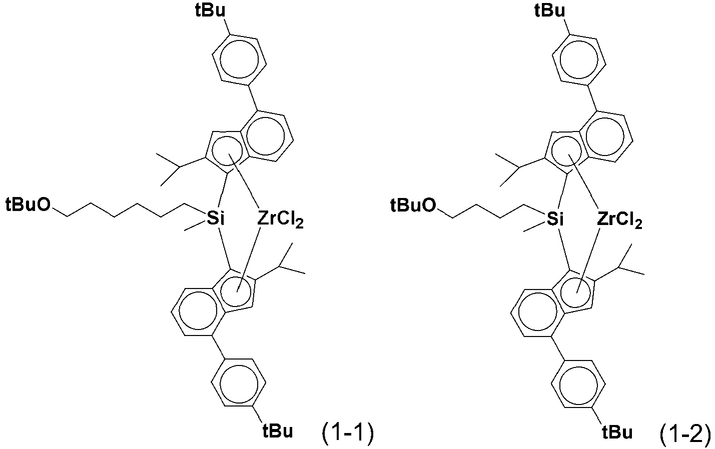

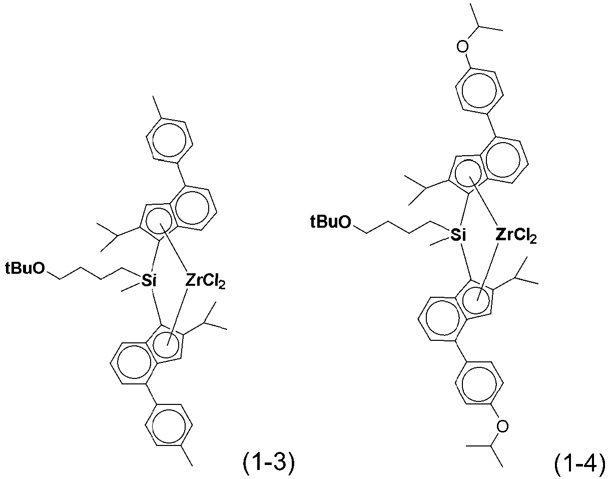

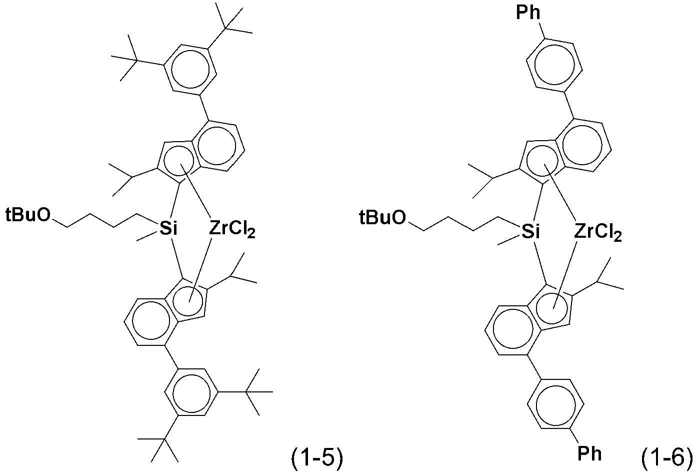

The transition metal compound represented by the Chemical Formula 1 can be synthesized by applying known reactions.

For example, the transition metal compound may be prepared by a method including a step (Step 1) of reacting an indene compound (i) with a halogenated silane compound (Silane) as a raw material for providing a bridge group to prepare a ligand compound (ii) in which two indenyls are connected by a silicon bridge group, as shown in the following Reaction Scheme 1; and a step (Step 2) of reacting the ligand compound (ii) with a halogen salt of a Group 4 transition metal (Metal halide) to prepare the transition metal compound (1) of the Chemical Formula 1. The following Reaction Scheme 1 is only one example for explaining the present invention, and the present invention is not necessarily limited thereto.

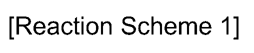

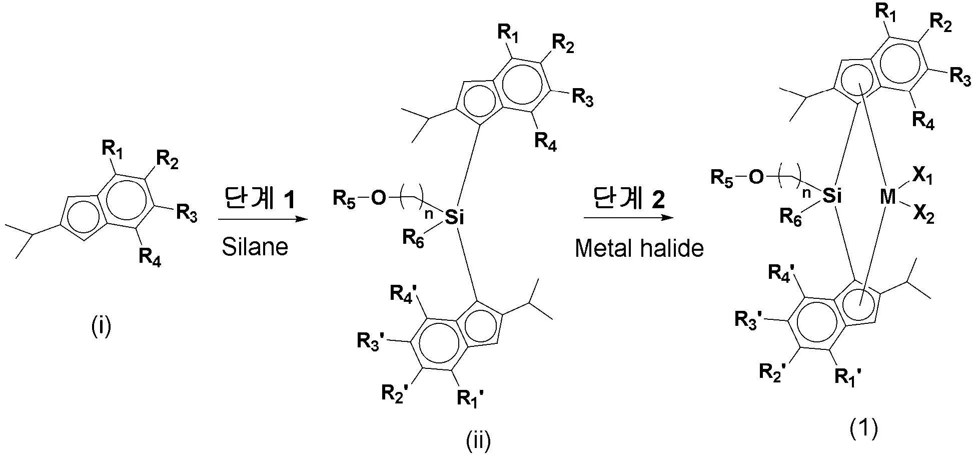

In the Reaction Scheme 1, each substituent is as defined above, and X is a halogen element.

Specifically, a method for preparing the transition metal compound according to an embodiment of the invention includes a step (Step 1) of reacting an indene compound (i) such as 2-isopropyl-4-tert-butylphenylindene with a halogenated silane compound such as (6-t-butoxyhexyl)dichloromethylsilane or (6-t-butoxybutyl)dichloromethylsilane as a raw material for providing a bridge group in the presence of an alkyl lithium such as n-butyllithium (n-BuLi) to prepare a ligand compound (ii); and a step (Step 2) of reacting the ligand compound (ii) with a halogen salt of a Group 4 transition metal (Metal halide) such as ZrCl₄ to prepare the transition metal compound (1) of the Chemical Formula 1.

Meanwhile, according to the present invention, a catalyst composition including the transition metal compound is provided.

Specifically, the catalyst composition may include the transition metal compound as a single component.

In addition, the catalyst composition may further include one or more of a support and a cocatalyst along with the transition metal compound.

When a support is further included, the catalyst composition may be in the form of a supported metallocene catalyst. When a supported metallocene catalyst is used, the morphology and physical properties of the prepared polypropylene are excellent, and it can be suitably used in conventional slurry polymerization, bulk polymerization, or gas phase polymerization processes.

Specifically, as the support, silica, a silica-alumina composite, or a silica-magnesia composite may be mentioned, and any one or a mixture of two or more of these may be used. In addition, as the support, a support having a highly reactive hydroxyl group, silanol group, or siloxane group on the surface can be used, and for this purpose, one that has been surface-modified by calcination or one from which moisture on the surface has been removed by drying can be used.

Among the supports mentioned above, in the case of silica, since the silica support and the functional group of the compound of Chemical Formula 1 are supported by chemical bonding, there is almost no catalyst that is released from the support surface during the propylene polymerization process, and as a result, fouling, where reactor walls or polymer particles stick together, can be minimized when preparing polypropylene by slurry or gas phase polymerization.

In addition, when supported on a support, the compound of Chemical Formula 1 may be supported in a content range of 10 µmol or more, or 12 µmol or more, or 14 µmol or more, and 30 µmol or less, or 20 µmol or less, or 16 µmol or less, based on about 1 g of silica, for example, per weight of the support. When supported in the above content range, it is advantageous for the preparation of polypropylene.

In addition, when the catalyst composition further includes a cocatalyst, the cocatalyst may specifically include one or more of the compounds represented by the following Chemical Formulas 2 to 4.

[Chemical Formula 2] -[Al(R²²)-O]ₘ-

In the Chemical Formula 2,
R²²s are the same as or different from each other, and are each independently a halogen group, a C₁₋₂₀ alkyl group, or a C₁₋₂₀ haloalkyl group;
m is an integer greater than or equal to 2 ;

[Chemical Formula 3] J(R²³)₃

In the Chemical Formula 3,
R²³s are the same as or different from each other, and are each independently a halogen group, a C₁₋₂₀ alkyl group, or a C₁₋₂₀ haloalkyl group;
J is aluminum or boron;
[Chemical Formula 4]
[E-H]⁺[ZQ₄]⁻

In the Chemical Formula 4,
E is a neutral or cationic Lewis base;
H is a hydrogen atom;
Z is a Group 13 element;
Qs are the same as or different from each other, and are each independently a C₆₋₂₀ aryl group or a C₁₋₂₀ alkyl group, wherein the C₆₋₂₀ aryl group or the C₁₋₂₀ alkyl group is unsubstituted or substituted with one or more substituents selected from the group consisting of a halogen group, a C₁₋₂₀ alkyl group, a C₁₋₂₀ alkoxy group, and a C₆₋₂₀ aryloxy group.

Examples of the compound represented by the Chemical Formula 2 include aluminoxane-based compounds such as methylaluminoxane, ethylaluminoxane, isobutylaluminoxane, or butylaluminoxane, and any one or a mixture of two or more of these may be used.

Examples of the compound represented by the Chemical Formula 3 include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminum methoxide, dimethylaluminum ethoxide, trimethylboron, triethylboron, triisobutylboron, tripropylboron, tributylboron, etc., and more specifically, it may be selected from trimethylaluminum, triethylaluminum, and triisobutylaluminum.

Examples of the compound represented by the Chemical Formula 4 include triethylammoniumtetraphenylboron, tributylammoniumtetraphenylboron, trimethylammoniumtetraphenylboron, tripropylammoniumtetraphenylboron, trimethylammoniumtetra(p-tolyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetrapentafluorophenylboron, diethylammoniumtetrapentafluorophenylboron, triphenylphosphoniumtetraphenylboron, trimethylphosphoniumtetraphenylboron, triethylammoniumtetraphenylaluminum, tributylammoniumtetraphenylaluminum, trimethylammoniumtetraphenylaluminum, tripropylammoniumtetraphenylaluminum, trimethylammoniumtetra(p-tolyl)aluminum, tripropylammoniumtetra(p-tolyl)aluminum, triethylammoniumtetra(o,p-dimethylphenyl)aluminum, tributylammoniumtetra(p-trifluoromethylphenyl)aluminum, trimethylammoniumtetra(p-trifluoromethylphenyl)aluminum, tributylammoniumtetrapentafluorophenylaluminum, N,N-diethylaniliniumtetraphenylaluminum, N,N-diethylaniliniumtetrapentafluorophenylaluminum, diethylammoniumtetrapentatetraphenylaluminum, triphenylphosphoniumtetraphenylaluminum, trimethylphosphoniumtetraphenylaluminum, tripropylammoniumtetra(p-tolyl)boron, triethylammoniumtetra(o,p-dimethylphenyl)boron, tributylammoniumtetra(p-trifluoromethylphenyl)boron, triphenylcarboniumtetra(p-trifluoromethylphenyl)boron, or triphenylcarboniumtetrapentafluorophenylboron, and any one or a mixture of two or more of these may be used.

Among the cocatalysts mentioned above, the compound of the Chemical Formula 2 can be used in terms of improving catalyst activity when used with the compound of the Chemical Formula 1. More specifically, as the cocatalyst, an alkylaluminoxane such as methylaluminoxane can be additionally used. The alkylaluminoxane-based cocatalyst acts as a scavenger for hydroxyl groups existing on the surface of the support to improve the catalyst activity, and converts the halogen group of the catalyst precursor to a methyl group to promote the growth of the polypropylene chain.

The cocatalyst may be supported in a content of 1 mmol or more, or 2 mmol or more per weight of the support, for example, based on 1 g of silica, and also may be supported in a content of 10 mmol or less, or 5 mmol or less. When included in the above content range, the effect of improving catalyst activity due to the use of the cocatalyst can be exhibited.

In a catalyst composition, the degree of being supported varies depending on the degree of bonding between the support and the transition metal compound. When the supporting of the transition metal compound, which is a catalyst precursor, is not securely performed, leaching, where the catalyst precursor detaches from the support during the polymerization process, occurs, and if such a phenomenon exists, the polymerization process stability deteriorates significantly, causing process troubles (reactor fouling, plugging) in long-term production. In response to this, the transition metal compound of the Chemical Formula 1 has an optimized structure and substituent characteristics to form a high bonding strength with the support, thereby significantly reducing the elution of Group 4 transition metals such as Ti and Zr, and as a result, can maintain excellent process stability even in long-term production. In addition, polypropylene with controlled physical properties can be easily prepared.

Accordingly, the present invention provides a method for preparing polypropylene, including a step of polymerizing a propylene monomer in the presence of the catalyst composition.

The polymerization reaction can be carried out by homopolymerizing propylene using one continuous slurry polymerization reactor, loop slurry reactor, gas phase reactor, or solution reactor.

And, the temperature during the polymerization reaction may be 20°C or more, or 50°C or more, or 70°C or more, and 200°C or less, or 150°C or less, or 120°C or less.

In addition, the pressure during the polymerization reaction may be 10 bar or more, or 15 bar or more, or 20 bar or more, and 50 bar or less, or 40 bar or less, or 35 bar or less.

In addition, the catalyst composition described above may be introduced into the polymerization reaction as it is, or it may be introduced after being dissolved or diluted in a solvent. As the solvent, an aliphatic hydrocarbon solvent with 5 to 12 carbon atoms such as pentane, hexane, heptane, nonane, and decane; an aromatic hydrocarbon solvent such as toluene and benzene; or a hydrocarbon solvent substituted with one or more chlorine atoms such as dichloromethane and chlorobenzene; may be mentioned, and any one or a mixture of two or more of these may be used. In addition, the solvent may be used after removing a small amount of water or air that acts as a catalyst poison in the solvent by treating it with a small amount of alkyl aluminum.

As described above, the transition metal compound according to the present invention exhibits excellent hydrogen reactivity when used as a polymerization catalyst for preparing polypropylene. Accordingly, polypropylene with a melt index (high MI) suitable for manufacturing fibers or nonwoven fabrics, for example, an MI of 200.0 g/10min to 1000.0 g/10min, can be prepared with a small amount of hydrogen input.

For example, during the polymerization reaction, hydrogen gas may be introduced in an amount of 0.1 to 30% by volume based on the total volume of the propylene monomer. More specifically, the hydrogen gas may be introduced in an amount of 0.1% by volume or more, or 1% by volume or more, or 5% by volume or more, or 10% by volume or more, and 30% by volume or less, or 25% by volume or less, or 20% by volume or less, or 15% by volume or less, based on the total weight of the propylene monomer.

In addition, the polymerization reaction may be a homopolymerization reaction that polymerizes the propylene monomer alone. Accordingly, the polypropylene according to the present invention may be a homopolymer.

The polypropylene according to the present invention prepared by the polymerization reaction exhibits a low weight-average molecular weight and a high melt index along with a narrow molecular weight distribution.

Specifically, the polypropylene may satisfy all of the following conditions (i) to (iii):
(i) molecular weight distribution: 2.60 or less
(ii) weight-average molecular weight: 50,000 to 100,000 g/mol
(iii) melt index measured under the conditions of 230°C and 2.16 kg according to the ASTM D1238 standard: 200.0 to 1,000.0 g/10min.

Specifically, the polypropylene has a narrow molecular weight distribution (Mw/Mn) of 2.60 or less. By having such a narrow molecular weight distribution, it exhibits excellent spinning properties and strength properties, and as a result, enables ultra-low basis weight when manufacturing fibers or nonwoven fabrics, especially meltblown nonwoven fabrics. More specifically, the polypropylene may have a value of 2.60 or less, or 2.55 or less, or 2.52 or less, or 2.50 or less, or 2.30 or less. The lower limit of the molecular weight distribution is not particularly limited, but for example, it may be 1.00 or more, or 1.50 or more, or 2.00 or more, or 2.10 or more, or 2.15 or more, or 2.18 or more.

In addition, the polypropylene has a low weight-average molecular weight of 50,000 to 100,000 g/mol. Due to such a low Mw, it can exhibit a high melt index, and as a result, can exhibit improved fiber spinnability or fiber processability along with excellent rigidity. Specifically, the polypropylene may have a weight-average molecular weight of 50,000 g/mol or more, or 60,000 g/mol or more, or 70,000 g/mol or more, or 75,000 g/mol or more, and 100,000 g/mol or less, or 90,000 g/mol or less, or 87,000 g/mol or less.

Meanwhile, in the present invention, the weight-average molecular weight (Mw) and molecular weight distribution (Mw/Mn) of polypropylene are calculated as the ratio of the weight-average molecular weight to the number-average molecular weight (Mw/Mn) after measuring the weight-average molecular weight (Mw) and number-average molecular weight (Mn) of the polymer using Gel Permeation Chromatography (GPC, manufactured by Waters), respectively. At this time, the weight-average molecular weight (Mw) and number-average molecular weight (Mn) are polystyrene-equivalent molecular weights analyzed by GPC. A specific measurement method is as described in the experimental examples below.

In addition, the polypropylene has a high melt index (MI_{2.16}) (ASTM D1238, 230°C, 2.16 kg) of 200.0 to 1,000.0 g/10min. By exhibiting such a high melt index, it can exhibit excellent strength properties, and as a result, can exhibit ultra-low basis weight properties and excellent strength properties when manufacturing nonwoven fabrics, especially meltblown nonwoven fabrics. Specifically, the MI_{2.16} of the polypropylene may be 200.0 g/10min or more, or 400.0 g/10min or more, or 500.0 g/10min or more, or 600.0 g/10min or more, or 650.0 g/10min or more, and 1,000.0 g/10min or less, or 800.0 g/10min or less, or 750.0 g/10min or less, or 710.0 g/10min or less.

The polypropylene according to the present invention, which simultaneously satisfies the physical property requirements, exhibits excellent fiber spinnability and high rigidity compared to conventional Ziegler-Natta catalyst-produced polypropylene, conventional metallocene catalyst-produced homopolypropylene or propylene copolymers, or polybutenes. Accordingly, it is possible to manufacture an ultra-low basis weight and high-rigidity nonwoven fabric that can reduce the amount of plastic used in items such as diapers, particularly a low-brittleness, microfibrillated meltblown nonwoven fabric.

Hereinafter, the action and effects of the invention will be described in more detail through specific examples of the invention. However, these examples are presented merely as illustrations of the invention, and the scope of rights of the invention is not determined thereby.

### <Preparation of transition metal compounds>

### Synthesis Example 1

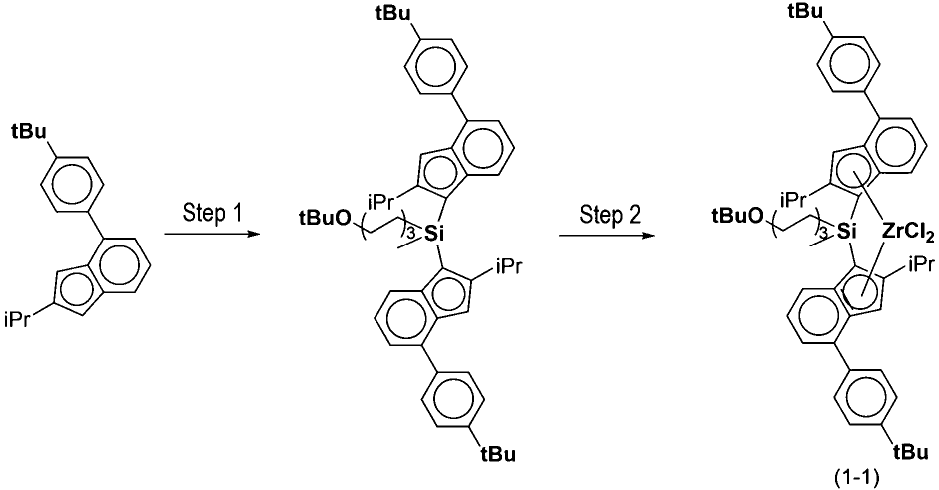

### Step 1: Ligand Synthesis

2-Isopropyl-4-tert-butylphenylindene (15.0 g, 51.6 mmol) was dissolved in a toluene/THF=1/1 solution (172 mL), and then an n-butyllithium solution (2.5 M, hexane solvent, 22.7 mL) was slowly added dropwise at 0°C, followed by stirring at room temperature for 4 hours. Thereafter, (6-t-butoxyhexyl)dichloromethylsilane (7.40 g) was slowly added dropwise to the mixed solution at -78°C, and after stirring for about 10 minutes, the mixture was stirred at room temperature for one day. Thereafter, water was added to separate the organic layer, and then the solvent was distilled off under reduced pressure to obtain (6-t-butoxyhexyl)(methyl)-bis(2-isopropyl-4-tert-butyl-phenylindenyl)silane.

### Step 2: Synthesis of transition metal compound

43 mL of Toluene and 21.5 mL of Et₂O were injected into the dried ligand and stirred. The resulting reaction product was cooled to -78°C, and then n-BuLi (2.5 M, 22.7 mL) was slowly added dropwise while stirring. After the completion of the n-BuLi addition, the resulting mixture was further stirred at room temperature for about 4 hours, cooled to -20°C, and then a solution of ZrCl₄ (6 g) dissolved in Toluene was added thereto. The resulting mixture was stirred at 25°C for 12 hours and then dried to remove the solvent. The resulting dried material was added with THF and stirred, then vacuum dried. The resulting obtained material was filtered using dichloromethane (DCM), then dried, and recrystallization was performed using toluene/hexane. As a result, the transition metal compound (1-1) of the above structure was obtained as a yellow powder (yield: 35%).

1H NMR (500 MHz, CDCl3) δ 7.69 - 7.54 (m, 5H), 7.47 (dd, J = 11.5, 4.8 Hz, 5H), 7.35 (d, J = 6.9 Hz, 2H), 7.09 (ddd, J = 8.7, 7.0, 3.8 Hz, 2H), 7.00 (s, 2H), 3.38 (t, J = 6.5 Hz, 2H), 3.26 - 3.09 (m, 2H), 2.07 - 1.79 (m, 3H), 1.75 - 1.45 (m, 7H), 1.44 - 1.29 (m, 22H), 1.20 (s, 9H), 1.16 - 1.04 (m, 12H).

### Synthesis Example 2

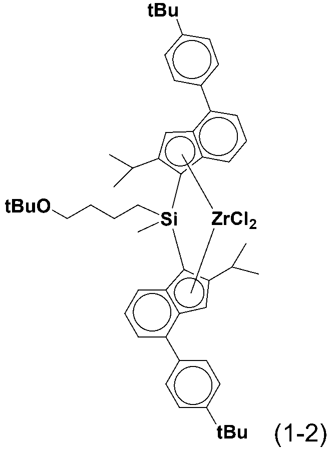

The transition metal compound (1-2) of the above structure was prepared by performing the same method as in Synthesis Example 1, except that (6-t-butoxybutyl)dichloromethylsilane was used instead of (6-t-butoxyhexyl)dichloromethylsilane in Step 1 of Synthesis Example 1.

1H NMR (500 MHz, CDCl3) δ 7.62 (m, J = 8.6 Hz, 5H), 7.54 (m, J = 8.7 Hz, 1H), 7.47 (m, J = 7.9 Hz, 4H), 7.36 (d, J = 6.9 Hz, 2H), 7.10 (q, J = 7.9 Hz, 2H), 7.01 (s, 2H), 3.51 (t, J = 6.1 Hz, 2H), 3.29 - 3.13 (m, 2H), 2.12 - 1.79 (m, 5H), 1.73 - 1.61 (m, 1H), 1.37 (d, J = 17.2 Hz, 22H), 1.26 - 1.21 (m, 9H), 1.12 (t, J = 7.2 Hz, 12H).

### Synthesis Example 3

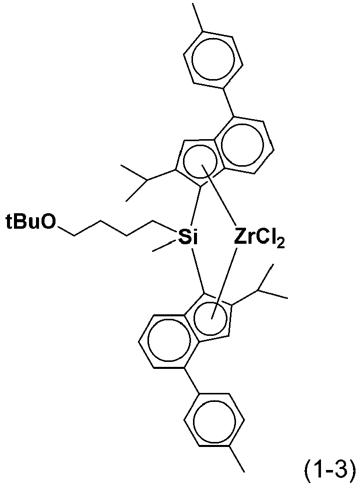

The transition metal compound (1-3) of the above structure was prepared by performing the same method as in Synthesis Example 1, except that 2-isopropyl-4-methyl-phenylindene was used instead of 2-isopropyl-4-t-butylphenylindene and (6-t-butoxybutyl)dichloromethylsilane was used instead of (6-t-butoxyhexyl)dichloromethylsilane in Step 1 of Synthesis Example 1.

1H NMR (500 MHz, CDCl3) δ 7.50 (d, J = 8.9 Hz, 1H), 7.43 (m, 5H), 7.23 (m, 2H), 7.15 (S, 3H), 7.14 (s, 2H), 6.99 (m, 2H), 6.85 (d, J = 4.0 Hz, 2H), 3.39 (t, J = 6.3 Hz, 2H), 3.08 (m, 2H), 2.27 (s, 6H), 1.96 - 1.91 (m, 1H), 1.87 - 1.82 (m, 2H), 1.79 - 1.74 (m, 2H), 1.58 - 1.52 (m, 1H), 1.27 (s, 3H), 1.13 (S, 9H), 1.02 - 0.98 (m, 12H).

### Synthesis Example 4

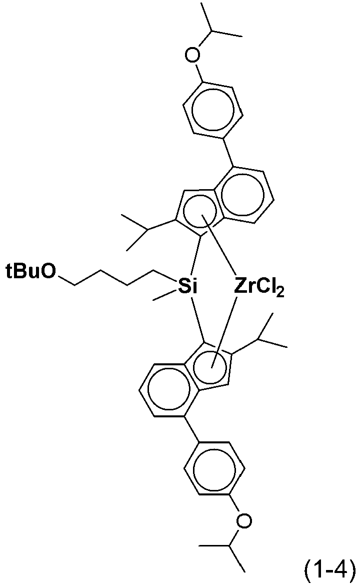

The transition metal compound (1-4) of the above structure was prepared by performing the same method as in Synthesis Example 1, except that 2-isopropyl-4-isopropoxy-phenylindene was used instead of 2-isopropyl-4-t-butylphenylindene and (6-t-butoxybutyl)dichloromethylsilane was used instead of (6-t-butoxyhexyl)dichloromethylsilane in Step 1 of Synthesis Example 1.

1H NMR (500 MHz, CDCl3) δ 7.62 - 7.51 (m, 6H), 7.34 - 7.32 (m, 2H), 7.13 - 7.07 (m, 2H), 7.01 - 6.96 (m, 6H), 4.59 (m, 2H), 3.51 (t, J = 6.3 Hz, 2H), 3.22 (m, 2H), 2.07 - 2.00 (m, 1H), 1.99 - 1.94 (m, 2H), 1.92 - 1.86 (m, 2H), 1.39 - 1.36 (m, 16H), 1.25 (s, 9H), 1.15 - 1.10 (m, 12H)

### Synthesis Example 5

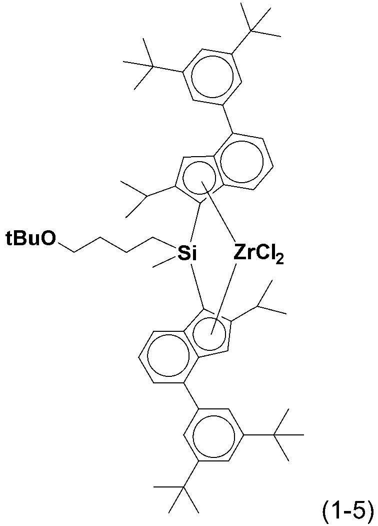

The transition metal compound (1-5) of the above structure was prepared by performing the same method as in Synthesis Example 1, except that 2-isopropyl-4-(2,4-dimethyl-phenyl)indene was used instead of 2-isopropyl-4-t-butylphenylindene and (6-t-butoxybutyl)dichloromethylsilane was used instead of (6-t-butoxyhexyl)dichloromethylsilane in Step 1 of Synthesis Example 1.

1H NMR (500 MHz, CDCl3) δ 7.63 (d, J = 6.9 Hz, 1H), 7.57 (m, 4H), 7.54 (d, 2H), 7.42 - 7.40 (m, 4H), 7.13 - 7.08 (m, 2H), 7.03 (s, 2H), 3.51 (t, J = 6.3 Hz, 2H), 3.25 - 3.16 (m, 2H), 2.09 - 1.85 (m, 6H), 1.39 (s, 6H), 1.32 (s, 36H), 1.24 (s, 9H), 1.12 - 1.08 (m, 12H)

### Synthesis Example 6

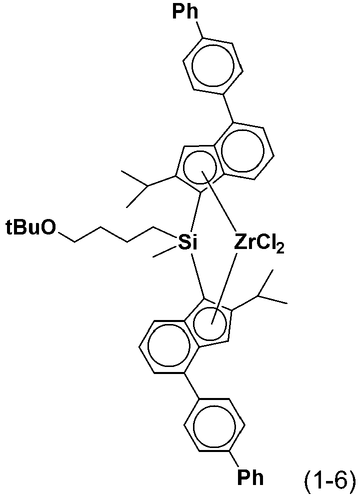

The transition metal compound (1-6) of the above structure was prepared by performing the same method as in Synthesis Example 1, except that 2-isopropyl-4-biphenylindene was used instead of 2-isopropyl-4-t-butylphenylindene and (6-t-butoxybutyl)dichloromethylsilane was used instead of (6-t-butoxyhexyl)dichloromethylsilane in Step 1 of Synthesis Example 1.

1H NMR (500 MHz, CDCl3) δ 7.63 - 7.61 (m, 4H), 7.58 - 7.54 (m, 6H), 7.51 - 7.50 (m, 4H), 7.44 (d, 1H), 7.32 - 7.28 (m, 6H), 7.24 - 7.19 (m, 2H), 7.02 - 6.98 (m, 2H), 6.90 (d, 2H), 3.38 (t, J = 6.3 Hz, 2H), 3.09 (m, 2H), 1.95 - 1.90 (m, 1H), 1.88 - 1.82 (m, 2H), 1.79 - 1.73 (m, 2H), 1.58 - 1.52 (m, 1H), 1.27 (s, 3H), 1.12 (s, 9H), 1.02 - 0.99 (m, 12H)

### Example 1

### Preparation of catalyst composition

32 mL of Toluene was added to a Pico reactor, and then 5 g of silica was transferred. 10 mmol of methylaluminoxane (MAO) was added to the reactor and reacted at 90°C for 24 hours. The resulting reaction product was precipitated, the supernatant was separated and removed, and the remaining precipitate was washed twice with toluene. 70 µmol of the transition metal compound (1-1) prepared in Synthesis Example 1 was dissolved in toluene, then added to the washed obtained product, and reacted at 50°C for 3 hours. After the reaction was completed, when the reaction product precipitated, the supernatant was separated and removed, and the remaining precipitate was washed with toluene. Thereafter, the precipitate was washed again with hexane, 3 wt% of Atmer was added under hexane, and stirred for 10 minutes. After stirring, when the reaction product precipitated, the supernatant was separated and removed, and the remaining precipitate was vacuum dried to obtain a catalyst composition in the form of solid particles.

### Preparation of polypropylene

A stainless steel reactor was purged with Ar, and 1.5 mL of triethylaluminum, 20 mL of hydrogen, and 200 mL of propylene were sequentially added at room temperature. At this time, the amount of hydrogen gas input corresponds to 10% by volume based on the total volume of the propylene monomer. Thereafter, after stirring for 10 minutes, the catalyst composition prepared above was introduced into the reactor under nitrogen pressure. After polymerizing at a polymerization pressure of about 30 bar and a polymerization temperature of 70°C for 30 minutes, unreacted propylene was vented.

When preparing the polypropylene, the catalyst activity (Activity, kgPP/gCat·hr) was calculated as the ratio of the weight of the produced polymer (kg PP) per weight of the catalyst composition used (g) based on unit time (hr). As a result, the catalyst composition showed a catalyst activity of 2.95 kgPP/gCat·hr.

### Example 2

A catalyst composition and polypropylene were prepared by performing the same method as in Example 1, except that the transition metal compound (1-2) prepared in Synthesis Example 2 was used instead of the transition metal compound (1-1) in the preparation of the catalyst composition in Example 1. In addition, the catalyst activity of the catalyst composition calculated by the same method as in Example 1 was 2.39 kgPP/gCat·hr.

### Example 3

A catalyst composition and polypropylene were prepared by performing the same method as in Example 1, except that the transition metal compound (1-3) prepared in Synthesis Example 3 was used instead of the transition metal compound (1-1) in the preparation of the catalyst composition in Example 1. In addition, the catalyst activity of the catalyst composition calculated by the same method as in Example 1 was 2.09 kgPP/gCat·hr.

### Example 4

A catalyst composition and polypropylene were prepared by performing the same method as in Example 1, except that the transition metal compound (1-4) prepared in Synthesis Example 4 was used instead of the transition metal compound (1-1) in the preparation of the catalyst composition in Example 1. In addition, the catalyst activity of the catalyst composition calculated by the same method as in Example 1 was 1.10 kgPP/gCat·hr.

### Example 5

A catalyst composition and polypropylene were prepared by performing the same method as in Example 1, except that the transition metal compound (1-5) prepared in Synthesis Example 5 was used instead of the transition metal compound (1-1) in the preparation of the catalyst composition in Example 1. In addition, the catalyst activity of the catalyst composition calculated by the same method as in Example 1 was 2.31 kgPP/gCat·hr.

### Example 6

A catalyst composition and polypropylene were prepared by performing the same method as in Example 1, except that the transition metal compound (1-6) prepared in Synthesis Example 6 was used instead of the transition metal compound (1-1) in the preparation of the catalyst composition in Example 1. In addition, the catalyst activity of the catalyst composition calculated by the same method as in Example 1 was 2.13 kgPP/gCat·hr.

### Comparative Example 1

A catalyst composition and polypropylene were prepared by performing the same method as in Example 1, except that the transition metal compound (a) of the following structure was used instead of the transition metal compound (1-1) in the preparation of the catalyst composition in Example 1.

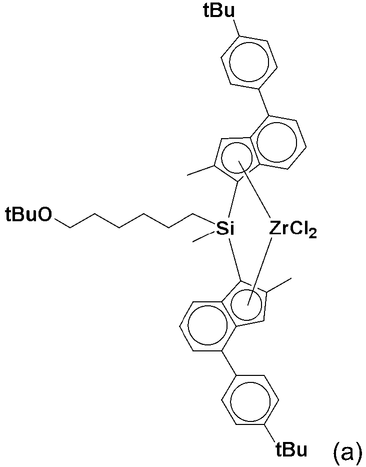

### Comparative Example 2

A catalyst composition and polypropylene were prepared by performing the same method as in Example 1, except that the transition metal compound (b) of the following structure was used instead of the transition metal compound (1-1) in the preparation of the catalyst composition in Example 1.

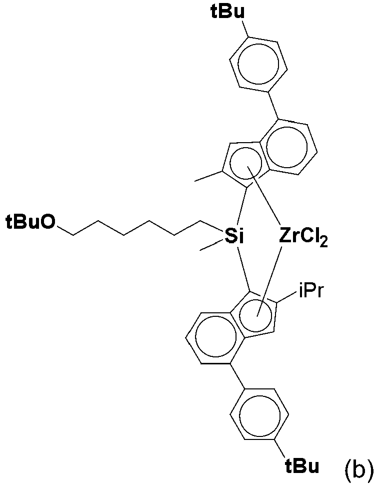

### Comparative Example 3

A catalyst composition and polypropylene were prepared by performing the same method as in Example 1, except that the transition metal compound (c) of the following structure was used instead of the transition metal compound (1-1) in the preparation of the catalyst composition in Example 1.

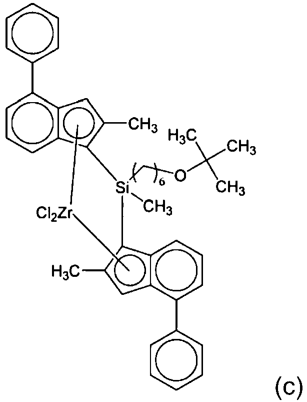

### Comparative Example 4

A catalyst composition and polypropylene were prepared by performing the same method as in Example 1, except that the transition metal compound (d) of the following structure was used instead of the transition metal compound (1-1) in the preparation of the catalyst composition in Example 1.

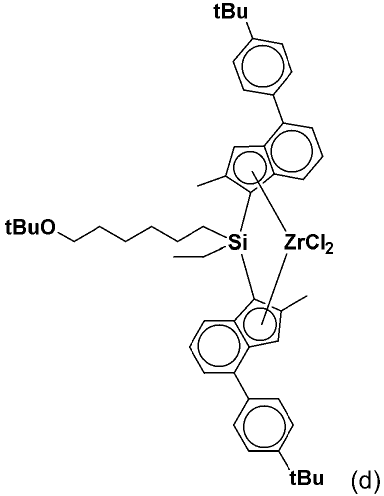

### Comparative Example 5

A catalyst composition and polypropylene were prepared by performing the same method as in Example 1, except that the transition metal compound (e) of the following structure was used instead of the transition metal compound (1-1) in the preparation of the catalyst composition in Example 1.

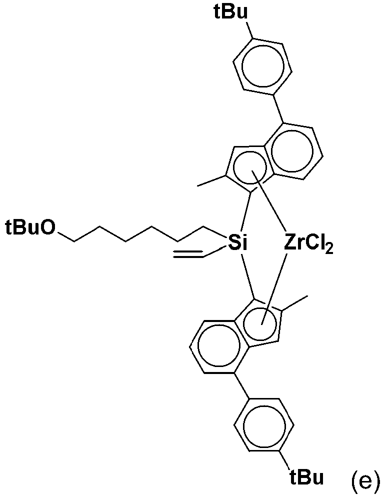

### Experimental Example

The physical properties of the polypropylene prepared in the above Examples and Comparative Examples were measured, and the results are shown in Table 1.

### (1) weight-average molecular weight (Mw) and molecular weight distribution (MWD)

The weight-average molecular weight (Mw, g/mol) and number-average molecular weight (Mn, g/mol) of the polypropylene were measured through Gel Permeation Chromatography (GPC) analysis, and the molecular weight distribution (MWD=Mw/Mn) was obtained by dividing the measured weight-average molecular weight by the number-average molecular weight.

Specifically, a Waters PL-GPC220 instrument was used as the Gel Permeation Chromatography (GPC) device, and a Polymer Laboratories PLgel MIX-B 300mm length column was used. At this time, the measurement temperature was 160°C, 1,2,4-trichlorobenzene was used as a solvent, and the flow rate was 1 mL/min. Each sample of the polypropylene prepared above was pretreated by dissolving it in 1,2,4-trichlorobenzene containing 0.0125% BHT at 160°C for 3 hours using a GPC analysis instrument (PL-GPC220), prepared at a concentration of 10 mg/10 mL, and then supplied in an amount of 200 µL. The values of Mw and Mn were derived using a calibration curve formed using polystyrene standard specimens. Nine types of polystyrene standard specimens with weight-average molecular weights of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol were used.

### (2) melt index (MI_{2.16})

The melt index was measured according to ASTM D1238 (Condition E, 230°C, 2.16 kg load) (g/10min).

**[Table 1]**

| | Transition metal compound | H₂ (mL) | Mw (g/mol) | MWD | MI (g/10min) |
|---|---|---|---|---|---|
| Example 1 | Compound 1-1 | 20 | 86,795 | 2.18 | 657.1 |
| Example 2 | Compound 1-2 | 20 | 75,640 | 2.27 | 701.3 |
| Example 3 | Compound 1-3 | 20 | 73,571 | 2.52 | 750.4 |
| Example 4 | Compound 1-4 | 20 | 96,371 | 2.50 | 600 |
| Example 5 | Compound 1-5 | 20 | 80,795 | 2.49 | 682.4 |
| Example 6 | Compound 1-6 | 20 | 85,387 | 2.47 | 660.7 |
| Comparative Example 1 | Compound a | 20 | 277,685 | 2.81 | 11.7 |
| Comparative Example 2 | Compound b | 20 | 126,000 | 2.38 | 121.9 |
| Comparative Example 3 | Compound c | 20 | 250,000 | 2.80 | 10 |
| Comparative Example 4 | Compound d | 20 | 273,218 | 2.85 | 12.01 |
| Comparative Example 5 | Compound e | 20 | 325,663 | 2.65 | 2.8 |

As a result of the experiment, the polypropylene prepared using the catalyst compositions of Examples 1 to 6, each including the transition metal compounds prepared in Synthesis Examples 1 to 6, exhibited a narrow molecular weight distribution of 2.60 or less despite a low weight-average molecular weight and a high melt index. From this, it can be predicted that the polypropylene exhibits excellent spinning properties during fiber spinning and has improved strength properties, making it advantageous for manufacturing a nonwoven fabric with ultra-low basis weight properties and high strength when manufacturing disposable hygiene products such as diapers.

Meanwhile, the polypropylene prepared using the catalyst compositions of Comparative Examples 1, 3, 4, and 5, each including the transition metal compounds (a), (c), (d), and (e) in which the carbon at the 2-position in the two indenyl structures is substituted with methyl, exhibited a wide molecular weight distribution along with a high weight-average molecular weight and a low melt index. From this, it can be predicted that the polypropylene of Comparative Examples 1, 3, 4, and 5 has deteriorated spinning properties and low strength properties, and as a result, it is difficult to manufacture a nonwoven fabric of ultra-low basis weight and high strength.

In addition, the polypropylene prepared using the catalyst composition of Comparative Example 2, which includes the transition metal compound (b) in which one of the two indenyl structures has the carbon at the 2-position substituted with an isopropyl group and the other is substituted with methyl, showed a narrow molecular weight distribution, but it is predicted that it is difficult to manufacture a nonwoven fabric of ultra-low basis weight and high strength due to its high weight-average molecular weight and low melt index.

From the above experimental results, it can be seen that the transition metal compound according to the present invention can prepare polypropylene having a low weight-average molecular weight and a high melt index along with a narrow molecular weight distribution of 2.60 or less, thereby exhibiting excellent fiber spinnability and strength properties, and as a result, can be useful for a nonwoven fabric having ultra-low basis weight properties and high strength properties.

## Claims

1. A transition metal compound represented by the following Chemical Formula 1: 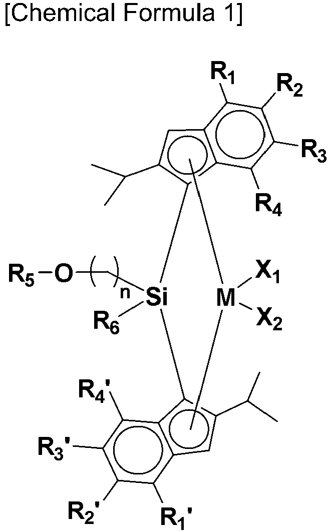
in the Chemical Formula 1,
M is a Group 4 transition metal,
R₁ and R₁' are the same as or different from each other, and are each independently a C₆₋₃₀ aryl group which is unsubstituted or substituted with one or more substituents selected from the group consisting of a C₁₋₂₀ alkyl group, a C₁₋₂₀ alkoxy group, a C₂₋₃₀ alkoxyalkyl group, a C₆₋₃₀ aryl group, a C₇₋₃₀ arylalkyl group, and a C₇₋₃₀ alkylaryl group,
R₂ to R₄, and R₂' to R₄' are the same as or different from each other, and are each independently hydrogen, deuterium, a C₁₋₃₀ alkyl group, a C₆₋₃₀ aryl group, a C₇₋₃₀ arylalkyl group, or a C₇₋₃₀ alkylaryl group,
R₅ and R₆ are the same as or different from each other, and are each independently a C₁₋₂₀ alkyl group,
X₁ and X₂ are the same as or different from each other, and are each independently a halogen group or a C₁₋₂₀ alkyl group, and
n is an integer between 1 to 20.

2. The transition metal compound of claim 1, wherein M is titanium, zirconium, or hafnium.

3. The transition metal compound of claim 1, wherein R₁ and R₁' are the same as or different from each other, and are each independently a C₆₋₁₈ aryl group which is unsubstituted or substituted with one or more substituents selected from the group consisting of a C₁₋₁₂ alkyl group, a C₁₋₁₂ alkoxy group, a C₂₋₂₀ alkoxyalkyl group, a C₆₋₂₀ aryl group, a C₇₋₂₀ arylalkyl group, and a C₇₋₂₀ alkylaryl group.

4. The transition metal compound of claim 1, wherein R₁ and R₁' are the same as each other, and are a C₆₋₁₂ aryl group which is unsubstituted or substituted with one or more substituents selected from the group consisting of a C₁₋₆ straight-chain alkyl group, a C₃₋₆ branched-chain alkyl group, a C₁₋₆ straight-chain alkoxy group, a C₃₋₆ branched-chain alkoxy group, and a C₆₋₁₂ aryl group.

5. The transition metal compound of claim 1, wherein R₁ and R₁' are the same as each other, and are a t-butylphenyl group, a 2,4-di-t-butylphenyl group, a methylphenyl, an isopropoxyphenyl, or a biphenyl.

6. The transition metal compound of claim 1, wherein R₂ to R₄, and R₂' to R₄' are each hydrogen.

7. The transition metal compound of claim 1, wherein R₅ is a C₃₋₁₂ branched-chain alkyl group, and R₆ is a C₁₋₆ straight-chain or branched-chain alkyl group.

8. The transition metal compound of claim 1, wherein R₅ is a t-butyl group, and R₆ is a methyl group.

9. The transition metal compound of claim 1, wherein X₁ and X₂ are the same as or different from each other, and are each independently a chloro or methyl group.

10. The transition metal compound of claim 1, wherein n is an integer between 1 to 6.

11. The transition metal compound of claim 1, wherein the transition metal compound is any one of the compounds represented by the following Chemical Formulas 1-1 to 1-6:

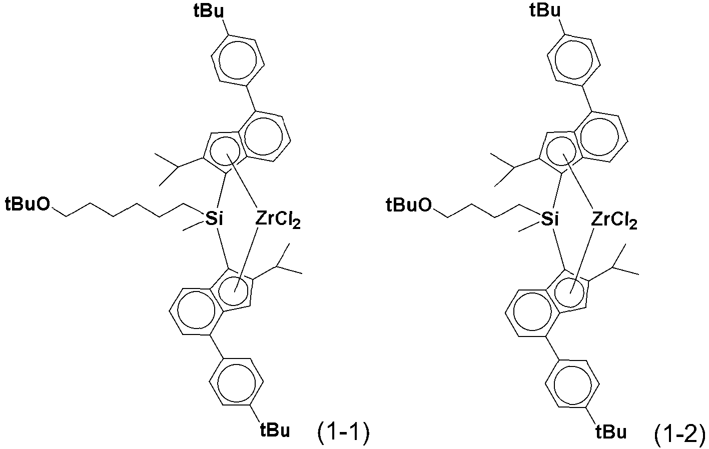

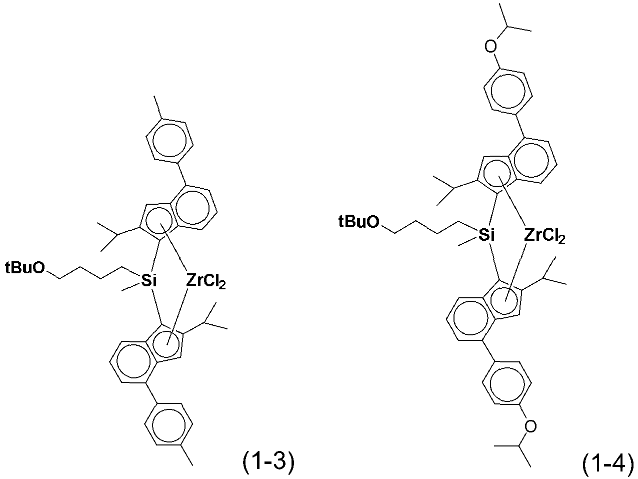

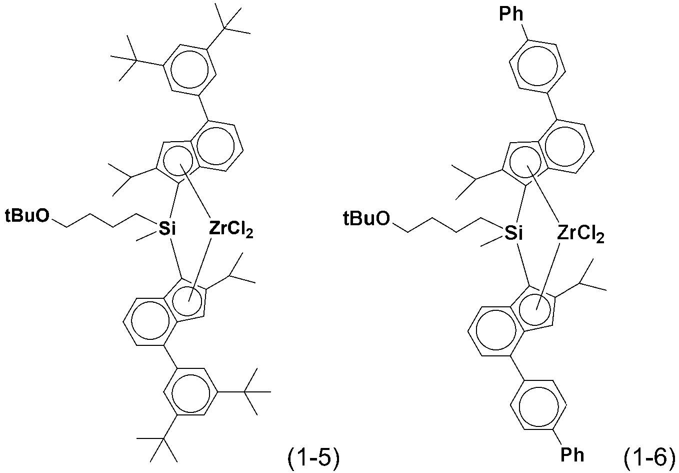

12. A catalyst composition comprising the transition metal compound of claim 1.

13. The catalyst composition of claim 12, further comprising one or more of a cocatalyst and a support.

14. The catalyst composition of claim 13, wherein the cocatalyst is selected from the group consisting of compounds represented by the following Chemical Formulas 2 to 4:
[Chemical Formula 2] -[Al(R²²)-O]ₘ-
in the Chemical Formula 2,
R²²s are the same as or different from each other, and are each independently halogen, a C₁₋₂₀ alkyl group, or a C₁₋₂₀ haloalkyl group;
m is an integer greater than or equal to 2 ;
[Chemical Formula 3] J(R²³)₃
in the Chemical Formula 3,
R²³s are the same as or different from each other, and are each independently a halogen group, a C₁₋₂₀ alkyl group, or a C₁₋₂₀ haloalkyl group;
J is aluminum or boron;
[Chemical Formula 4] [E-H]⁺[ZQ₄]⁻
in the Chemical Formula 4,
E is a neutral or cationic Lewis base;
H is a hydrogen atom;
Z is a Group 13 element;
Qs are the same as or different from each other, and are each independently a C₆₋₂₀ aryl group or a C₁₋₂₀ alkyl group, wherein the C₆₋₂₀ aryl group or the C₁₋₂₀ alkyl group is unsubstituted, or substituted with one or more substituents selected from the group consisting of a halogen group, a C₁₋₂₀ alkyl group, a C₁₋₂₀ alkoxy group, and a C₆₋₂₀ aryloxy group.

15. The catalyst composition of claim 13, wherein the support comprises silica, a silica-alumina composite, a silica-magnesia composite, or a mixture thereof.

16. A method for preparing polypropylene, comprising a step of polymerizing a propylene monomer in the presence of the catalyst composition according to claim 12.

17. The method for preparing polypropylene of claim 16, wherein the polymerization is performed by introducing hydrogen gas in an amount of 0.1 to 30% by volume based on the total volume of the propylene monomer.

18. The method for preparing polypropylene of claim 16, wherein the polypropylene satisfies the following conditions (i) to (iii):
(i) molecular weight distribution: 2.60 or less
(ii) weight-average molecular weight: 50,000 to 100,000 g/mol
(iii) melt index measured under the conditions of 230°C and 2.16 kg according to the ASTM D1238 standard: 200.0 to 1,000.0 g/10min.
